# EUROPÄISCHE PATENTSCHRIFT

(11) **EP 0 505 799 B1**
(45) Veröffentlichungstag und Bekanntmachung des Hinweises auf die Patenterteilung: **05.06.1996**
(21) Anmeldenummer: 92103940.0
(22) Anmeldetag: 07.03.1992
(51) Int. Cl.: C08L 55/02

(54) **ABS-Formmassen mit bimodaler Kautschukpartikelgrössenverteilung**
ABS-moulding materials with bimodal distribution of rubber particle size
Matières de moulage ABS à répartition bimodale des dimensions des particules de caoutchouc

(30) Priorität: 27.03.1991 DE 4110008
(43) Veröffentlichungstag der Anmeldung: 30.09.1992
(73) Patentinhaber: BASF Aktiengesellschaft, D-67063 Ludwigshafen (DE)
(72) Erfinder: Baumgartner, Ehrenfried, Dr., W-6701 Roedersheim-Gronau (DE); Hofmann, Juergen, W-6700 Ludwigshafen (DE); Jung, Rudolf H., Dr., W-6520 Worms 1 (DE); Moors, Rainer, Dr., W-6703 Limburgerhof (DE); Schaech, Hansjoerg, W-6700 Ludwigshafen (DE)

(56) Entgegenhaltungen:
- EP-A- 0 052 732
- EP-A- 0 288 298
- EP-A- 0 326 024
- GB-A- 1 182 943

## Beschreibung

Die Erfindung betrifft eine halbfertige, schlagzähe und zu glänzenden Formteilen verarbeitbare ABS-Formmasse mit bimodaler Verteilung der Kautschukpartikelgrößen, deren beide Kautschukphasen getrennt in Lösung- oder Masse bzw. in Emulsion hergestellt werden.

ABS-Formmassen mit bimodaler Kautschukpartikelgrößenverteilung sind bekannt. In der Regel wird dabei mindestens eine Kautschukphase in Emulsionspolymerisation hergestellt, was u.a. in den nachstehenden Druckschriften beschrieben ist.
(1) DE-A-1 745 098 & GB-A-1 182 943
(2) DE-A-1 900 134
(3) US-A-3 903 199
(4) US-A-3 903 200
(5) US-A-3 931 356
(6) US-A-4 713 420
(7) US-A-4 740 560
(8) EP-A-0 190 884

Es ist bekannt, daß Mischungen aus gepfropften Kautschuken und Styrol-Acrylnitril-Copolymeriaten zu Formmassen führen, die erwünschte Eigenschaften haben, insbesondere hinsichtlich der Zähigkeit und der chemischen Beständigkeit, dabei aber gut verformbar sind. Durch eine Erhöhung der Kautschukanteile kann man im allgemeinen die Zähigkeit erhöhen, doch führt die Erhöhung des Pfropfkautschukanteils meistens zu einer Verschlechterung anderer Eigenschaften, beispielsweise zu einer Verschlechterung der Eigenfarbe vor allem, wenn ein in Emulsionspolymerisation hergestellter Pfropfkautschuk eingesetzt wird. Neben der Kautschukkonzentration beeinflussen vor allem die Kautschukmorphologie und die Größe der Kautschukpartikel die Eigenschaften von ABS-Formmassen. Kautschukpartikel mit einem durchschnittlichen Durchmesser von mehr als 500 nm erhöhen vor allem die Zähigkeit der Produkte, verschlechtern aber gleichzeitig deren Oberflächenglanz. Kautschukpartikel mit einem Durchmesser von weniger als 500 nm ergeben hochglänzende ABS-Produkte, führen aber zu einer geringeren Zähigkeit als sie ABS-Produkte mit größeren Kautschukpartikeln aufweisen, wenn der gleiche Kautschukanteil in der Formmasse zugrundegelegt wird.

Ähnlich beeinflußt die individuelle Struktur der Kautschukpartikel die physikalischen Eigenschaften der ABS-Formmassen. Im allgemeinen gibt es zwei Typen von Kautschukpartikeln: In Lösung oder Masse polymerisierte und durch Ausfällen gewonnene Kautschukpartikel und in Emulsion polymerisierte Kautschukpartikel. Diese werden als LABS-Partikel bzw. als EABS-Partikel bezeichnet; eine Beschreibung der Herstellung ist in den Druckschriften (1) bzw. (2) zu finden.

Die in (1) beschriebenen LABS-Partikel enthalten im Kautschuk Einschlüsse der polymeren Matrix und werden üblicherweise in einer Masse-, Masse-Suspensions- oder Lösungspolymerisation gebildet und gepfropft. Diese Prozesse gehen von einem vorgebildeten (Grund-)kautschuk aus, der in den Monomeren und gegebenenfalls dem Lösungsmittel gelöst und dann der Polymerisation unterworfen wird, wobei sich während der Phaseninversion die LABS-Partikel ausbilden.

Üblicherweise sind die auf diese Art erhaltenen Kautschukpartikel größer als 500 nm und erniedrigen den Oberflächenglanz von ABS-Formmassen.

Die in (2) genannten EABS-Partikel sind im allgemeinen kleine feste Kautschukpartikel. Kautschukpartikel mit dieser Struktur werden üblicherweise in einem Emulsionsprozeß gebildet und gepfropft. Die Kautschukpartikel werden durch Polymerisation von z.B. Butadien in einer wäßrigen Phase unter Zuhilfenahme von geeigneten Emulgatoren hergestellt. Der wäßrige Kautschuklatex wird dann mit den Monomeren gepfropft, die auch in der Matrix enthalten sind, um durch physikalische Verschlaufung der Pfropfäste mit dem Matrixpolymeren eine gute Anbindung der Zäh- und Hartphase zu erreichen, was für die Zähigkeit der ABS-Formmassen entscheidend ist. Die auf diese Art hergestellten Kautschukpartikel haben in der Regel einen Teilchendurchmesser von unter 500 nm und liefern in ABS-Fertigteilen hochglänzende, aber auch leicht gelb gefärbte Oberflächen. Die während der Emulsionspolymerisation benötigten Hilfsstoffe können nur unvollständig von dem Polymeren herausgewaschen werden und führen dann durch chemische Nebenreaktionen während der Extruderverarbeitung zu gelben ABS-Produkten.

Abmischungen von kleinteiligem Emulsions-ABS mit großteiligem Lösungs-ABS sind bekannt, vgl. die eingangs angegebenen Druckschriften (1) - (8). Bei den beschriebenen Abmischungen enthält das Lösungs-ABS einen Kautschuk mit einer Teilchengröße von über 500 nm. Dadurch wird der Oberflächenglanz der hergestellten Fertigteile vor allem unter ungünstigen Spritzgießverhältnissen negativ beeinflußt. Lösungs-ABS mit Kautschukpartikelgrößen von weniger als 500 nm besitzt eine nur geringe Zähigkeit, wenn vergleichbarer Kautschukgehalt zugrundegelegt wird.

Aufgabe der Erfindung ist die Schaffung von hochglänzenden, hochzähen ABS-Produkten mit einer hellen Eigenfarbe, wie sie von reinem Lösungs-ABS bekannt ist. Die Aufgabe wird erfindungsgemäß gelöst, indem kleinteiliger, in Emulsionspolymerisation hergestellter Pfropfkautschuk einem ebenfalls kleinteiligen Lösungs-ABS beigemischt bzw. diese zusammen verwendet werden.

Weitere Polymere, die mit den vorstehend beschriebenen Lösungs-ABS-Produkten abgemischt werden können, sind z.B. Polystyrolacrylnitril und/oder Polymethylmethacrylat. Beide Polymere werden ebenfalls in einem Lösungs- oder Massepolymerisationsverfahren hergestellt. Das Polystyrolacrylnitril hat einen Acrylnitrilgehalt zwischen 10 und 40 Gew.-%. Polymethylmethacrylat kann auch als Copolymeres mit Acrylestern verwandt werden, wenn der Acrylesteranteil ≤ 20 Gew.-% ist.

Unmittelbarer Erfindungsgegenstand ist eine kautschukmodifizierte, schlagzähe Formmasse, enthaltend, bezogen auf die Summe aus A, B1 und B2,
- A:: 70 bis 98 Gew.-% einer Polymermatrix A, gebildet durch radikalisch ausgelöste Polymerisation eines Gemisches aus 60 bis 90 Gew.-% Styrol und 10 bis 40 Gew.-% Acrylnitril,
- B1:: 1 bis 29 Gew.-% eines teilchenförmigen, in der Polymermatrix A verteilten ersten Pfropfcopolymerisats B1 aus einer Pfropfgrundlage aus Polybutadien und Pfropfästen aus einem Copolymerisat aus Styrol und Acrylnitril mit einer durchschnittlichen Teilchengröße von etwa 100 bis 500 nm und
- B2:: 1 bis 29 Gew.-% eines teilchenförmigen, in der Polymermatrix A verteilten zweiten Pfropfcopolymerisats B2 aus einer Pfropfgrundlage aus Polybutadien und Pfropfästen aus einem Copolymerisat aus Styrol und Acrylnitril mit einer durchschnittlichen Teilchengröße von etwa 50 bis 400 nm,
wie sie erhalten wird dadurch, daß das erste Pfropfcopolymerisat B1 in Lösung und/oder Masse und das zweite Pfropfcopolymerisat B2 in Emulsion hergestellt und in üblicher Weise in die Polymermatrix eingearbeitet worden ist.
Lösungs-ABS mit Kautschukpartikeln, deren Durchmesser kleiner als 0,5 µm ist, können z.B. dadurch erhalten werden, daß die Polymerisation in mehreren hintereinandergeschalteten, im wesentlichen rückvermischungsfrei arbeitenden Rohrreaktoren vorgenommen wird, wobei in einem der Reaktoren Phaseninversion auftritt. Dabei soll die Reaktionstemperatur bis zur Phaseninversion bei 90°C oder weniger stattfinden und entsprechend leicht zerfallende Radikalinitiatoren (z.B. tert-Butylperester) verwendet werden.
Einzelheiten sind der EP-A-0 477 764 zu entnehmen, auf die anstelle einer ausführlichen Beschreibung verwiesen wird.

Die beiden Pfropfcopolymerisate B1 und B2 sind in der Polymermatrix im allgemeinen in einem solchen Verhältnis enthalten, daß das Gewichtsverhältnis der jeweiligen Polybutadienanteile 90:10 bis 10:90 beträgt, wobei der Gesamtgehalt an Polybutadien, bezogen auf die Polymermatrix, z.B. 5 bis 30 Gew.-% beträgt.

Vorteilhaft wird als Kautschuk-Pfropfgrundlage ein anionisch polymerisiertes Polybutadien verwendet.

Die erfindungsgemäßen Formmassen können z.B. durch Mischung aus verschiedenen ABS-Produkten erhalten werden, etwa, indem durch Emulsionspolymerisation erhaltenes ABS einer Schmelze von ABS kontinuierlich zugemischt wird, die aus Lösungs- oder Massepolymerisation gewonnen worden war.

Ebenso können entsprechende fertige Massen, die jeweils eines der Pfropfcopolymerisate B1 bzw. B2 enthalten, als Granulate gemischt und unter Schmelzen zur Formmasse verarbeitet werden.

Es ist natürlich ohne weiteres möglich, der erfindungsgemäßen Formmasse ein weiteres, mit der Hartmatrix verträgliches Polymeres auf einem Extruder oder Kneter zuzumischen.

Die nach dem erfindungsgemäßen Verfahren erhaltenen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern; besonders bevorzugt werden aus den nach dem erfindungsgemäpen Verfahren hergestellten Formmassen Formteile durch Spritzgießen hergestellt.

Die in den Beispielen aufgeführten Produkteigenschaften wurden wie folgt gemessen:
- Die mittlere Teilchengröße der Weichkomponentenphase wird durch Auswertung elektronenmikroskopischer Aufnahmen ermittelt.
   Die mittlere Teilchengröße wird als d₅₀-Wert (Volumenmedianwert) angegeben.
- Der Oberflächenglanz wurde mit einem Labor-Reflektometer nach Dr. Lange nach DIN 67 530 an den Seitenflächen von spritzgegossenen Testkästchen gemessen. Abweichend von DIN 67 530 wurde der Meßwinkel auf 55,8° eingestellt. Die Testkästchen haben eine Länge von 11 cm, eine Breite von 4,3 cm und eine Höhe von 5 cm. Die Testkästchen wiegen ca. 26 bis 27 g. Die Spritzgußbedingungen zur Herstellung der Testkästchen sind in den Beispielen angegeben.
- Der Yellowness-Index (Gelbwert) wurde an bei 230°C spritzgegossenen 1 mm dicken Rundscheiben gemessen. Zur Messung wurde ein Farbmeßgerät DMC25 der Firma Zeiss benutzt. Es wurde Tageslicht (Normalart D 65; Bedingung 1) als Sender und das menschliche Auge (10-Grad-Normbeoachter als Bedingung 2) als Empfänger angenommen.
- Die Kerbschlagzähigkeit wird an bei 230°C spritzgegossenen Formkörpern nach DIN 53 453 gemessen.
- Die Viskositätszahl der Polystyrolacrylnitrilmatrix wurde nach der Trennung von der Kautschukphase als 0,5 %ige Lösung in Dimethylformamid gemessen.

### Vergleichsversuche 1 und 2

Durch Polymerisation von 62 Teilen Butadien in einem Druckkessel in einer Lösung von 0,6 Teilen Tert.-Dodecylmercaptan, 0,7 Teilen C₁₄-Na-Alkylsulfonat als Emulgator, 0,2 Teilen Kaliumperoxodisulfat und 0,2 Teilen Natriumpyrophosphat in 80 Teilen Wasser bei 25°C wird ein Polybutadienlatex hergestellt. Der Umsatz beträgt 99 %. Es wird Polybutadien erhalten, dessen mittlere Teilchengröße zunächst bei 0,1 µm liegt und durch Zusatz von 25 Teilen einer Emulsion, eines Copolymeren aus 96 Teilen Ethylacrylat und 4 Teilen Methacrylsäureamid mit einem Feststoffgehalt von 10 Gew.-Teilen agglomeriert wird, wobei ein Latex mit einer mittleren Teilchengröße von 0,3 µm entsteht. Nach Zusetzen von 40 Teilen Wasser, 0,4 Teilen Na-C₁₄-Alkylsulfonat und 0,2 Teilen Kaliumperoxodisulfat wurden 38 Teile einer Mischung aus Styrol und Acrylnitril im Verhältnis 70 : 30 innerhalb von 4 Stunden zugeführt. Die Polymerisation geschah unter Rühren bei 75°C bis zum annähernd vollständigen Umsatz. Die erhaltene Pfropfkautschukdispersion wurde mittels Calciumchloridlösung gefällt, das abgetrennte Pfropfmischpolymerisat mit destilliertem Wasser gewaschen und jeweils ein Teil auf einem Zweischneckenextruder unter Entgasung bei 280°C mit getrennt hergestelltem PolystyrolacryInitril (VZ = 80,7 ml/g; AN-Gehalt = 25 Gew.-%) so abgestimmt, daß zwei verschiedene Formmassen nämlich eine mit 17 Gew.-% Polybutadien und eine mit 27 Gew.-% Polybutadien erhalten wurden.

Die Eigenschaften der beiden Emulsions-ABS-Typen sind in Tabelle 1 wiedergegeben.

**Tabelle 1**

| | | Vergleichsversuche | |
|---|---|---|---|
| | | 1 | 2 |
| Kautschukgehalt | [Gew.-%] | 17 | 27 |
| Kautschukpartikelgröße d₅₀ | [µm] | 0,3 | 0,3 |
| Viskositätszahl der PSAN-Matrix | [ml/g] | 80,7 | 80,7 |
| Acrylnitrilgehalt der PSAN-Matrix | [Gew.-%] | 25,0 | 25,0 |
| Styrolgehalt der PSAN-Matrix | [Gew.-%] | 75,0 | 75,0 |
| Oberflächenglanz (Bedingung 1) | [%] | 68,0 | 68,0 |
| Oberflächenglanz (Bedingung 2) | [%] | 47,0 | 38,0 |
| Kerbschlagzähigkeit 23°C | [kJ/m²] | 11,0 | 20,0 |
| Kerbschlagzähigkeit -40°C | [kJ/m²] | 4,0 | 10,2 |
| Yellownes Index | | 32,8 | 43,7 |

### Bedingung 1

| | |
|---|---|
| Massetemperatur | 255°C |
| Werkzeugoberflächentemperatur | 60°C |
| Einspritzzeit (Sekunden) | 0,14 |

### Bedingung 2

| | |
|---|---|
| Massetemperatur | 255°C |
| Werkzeugoberflächentemperatur | 30°C |
| Einspritzzeit (Sekunden) | 0,4 |

### Vergleichsversuch 3

Kleinteiliges Lösungs-ABS (Partikeldurchmesser ≤ 0,5 µm) wurde auf folgende Weise hergestellt:

Die Polymerisationsanlage besteht aus einem 250 l Kautschuklösebehälter, einem 250 l Vorratsbehälter sowie vier in Reihe geschalteten 30 l Turmreaktoren (1/d = 1100/220 mm) mit innenliegenden horizontal geführten parallelen Schichten von Kühlrohren und einem zwischen die Kühlrohrschichten greifenden Rührer und einer an die Polymerisationstürme anschließenden Entgasungs- und Granuliereinrichtung.

18 kg Kautschuk (Buna® HX 500 der BAYER AG mit einer Lösungsviskosität von 90 mPa·s als 5 %ige Lösung in Styrol bei 25°C) werden in 22,5 kg Ethylbenzol, 82,1 kg Styrol und 27,4 kg Acrylnitril unter Rühren innerhalb von 5 Stunden gelöst. Die fertige Kautschuklösung wird in den Vorratsbehälter gepumpt. Aus dem Vorratsbehälter wird die Polymerisationsanlage kontinuierlich mit 20 l Kautschuklösung pro Stunde beschickt. In den ersten beiden Reaktoren wird die Polymerisation bei 80°C durch kontinuierliche Zugabe von Tert.-Butylperpivalat ausgelöst, wobei im ersten Turm bis zu einem Feststoffgehalt von 18 Gew.-% und im zweiten Turm bis zu einem Feststoffgehalt von 28 Gew.-% polymerisiert wird. Dazu werden in den ersten Turm 2,1 g/h Tert.-Butylperpivalat gegeben und in den zweiten Turm 4,2 g/h. Die Rührgeschwindigkeiten betragen in beiden Polymerisationstürmen 150 Umdrehungen pro Minute.

In den beiden folgenden Reaktionstürmen wird thermisch polymerisiert. Hierzu wird im dritten Polymerisationsturm bei einer Temperatur von 130°C und einer Rührergeschwindigkeit von 50 Umdrehungen pro Minute ein Feststoffgehalt von 45 Gew.-% und im vierten Polymerisationsturm bei 146°C unter Rühren mit 10 Umdrehungen pro Minute ein Feststoffgehalt von 70 Gew.-% eingestellt. Alle vier Polymerisationstürme werden vollständig gefüllt betrieben. Tert.-Dodecylmercaptan als Molekulargewichtsregler wird in einer Menge von jeweils 17 g/h kontinuierlich in den zweiten und dritten Polymerisationsturm dosiert.

Nach dem vierten Polymerisationsturm wird entgast und nach dem Abkühlen granuliert. Der Durchsatz an ABS-Formmasse betrug 14 kg/h.

Die Produkteigenschaften des erzeugten L-ABS sind in Tabelle 2 wiedergegeben:

**Tabelle 2**

| | | Vergleichsbeispiel 3 |
|---|---|---|
| Kautschukgehalt | [Gew.-%] | 17,0 |
| Kautschukpartikelgröße d₅₀ | [µm] | 0,35 |
| Viskositätszahl der PSAN-Matrix | [ml/g] | 77 |
| Acrylnitrilgehalt der PSAN-Matrix | [Gew.-%] | 25,0 |
| Styrolgehalt der PSAN-Matrix | [Gew.-%] | 75,0 |
| Oberflächenglanz (Bedingung 1) | [%] | 68,0 |
| Oberflächenglanz (Bedingung 2) | [%] | 42,0 |
| Kerbschlagzähigkeit 23°C | [kJ/m²] | 6,0 |
| Kerbschlagzähigkeit -40°C | [kJ/m²] | 5,0 |
| Yellownes Index | | 11,8 |

Ein Lösungs-ABS mit einer Kautschukpartikelgröße von weniger als 500 nm und einer Kautschukkonzentration von über 20 Gew.-%, bezogen auf Styrol und Acrylnitril der Hartmatrix konnte aufgrund der hohen Lösungsviskosität in den beiden ersten Reaktionszonen nicht bis zur Phaseninversion gebracht werden.

### Beispiel

Als Lösungs-ABS mit kleinen Kautschukpartikeln wurde das in Vergleichsversuch 3 beschriebene ABS-Produkt verwandt. Als in Emulsionspolymerisation hergestellter Pfropfkautschuk wurde das in den Vergleichsversuchen 1 und 2 beschriebene Pfropfmischpolymerisat eingesetzt.

Das Lösungs-ABS wurde mit dem Pfropfkautschuk gemischt und im Extruder bei 280°C aufgeschmolzen und als abgemischtes Produkt granuliert. Es wurde soviel Pfropfkautschuk zugemischt, daß das Endprodukt 27 Gew.-% Polybutadien enthielt. Die Eigenschaften des Produkts sind in Tabelle 3 zusammengefaßt:

**Tabelle 3**

| | | |
|---|---|---|
| Kautschukgehalt | [Gew.-%] | 27,0 |
| Kautschukpartikelgröße d₅₀ | [µm] | 0,32 |
| Oberflächenglanz (Bedingung 1) | [%] | 68,0 |
| Oberflächenglanz (Bedingung 2) | [%] | 39,0 |
| Kerbschlagzähigkeit 23°C | [kJ/m²] | 19,7 |
| Kerbschlagzähigkeit -40°C | [kJ/m²] | 11,3 |
| Yellownes Index | | 25,3 |

## Patentansprüche

1. Kautschukmodifizierte, schlagzähe Formmasse, enthaltend, bezogen auf die Summe aus A, B1 und B2,
A: 70 bis 98 Gew.-% einer Polymermatrix A, gebildet durch radikalisch ausgelöste Polymerisation eines Gemisches aus 60 bis 90 Gew.-% Styrol und 10 bis 40 Gew.-% Acrylnitril,
B1: 1 bis 29 Gew.-% eines teilchenförmigen, in der Polymermatrix A verteilten ersten Pfropfcopolymerisats B1 aus einer Pfropfgrundlage aus Polybutadien und Pfropfästen aus einem Copolymerisat aus Styrol und Acrylnitril mit einer durchschnittlichen Teilchengröße von etwa 100 bis 500 nm und
B2: 1 bis 29 Gew.-% eines teilchenförmigen, in der Polymermatrix A verteilten zweiten Pfropfcopolymerisats B2 aus einer Pfropfgrundlage aus Polybutadien und Pfropfästen aus einem Copolymerisat aus Styrol und Acrylnitril mit einer durchschnittlichen Teilchengröße von etwa 50 bis 400 nm,
wie sie erhalten wird dadurch, daß das erste Pfropfcopolymerisat B1 in Lösung und/oder Masse und das zweite Pfropfcopolymerisat B2 in Emulsion hergestellt und beide in üblicher Weise in die Polymermatrix eingearbeitet worden sind.

2. Formmasse nach Anspruch 1, dadurch gekennzeichnet, daß die beiden Pfropfcopolymerisate B1 und B2 in einem Gewichtsverhältnis von 10:90 bis 90:10, bezogen auf Polybutadien, in der Polymermatrix vorhanden sind.

3. Formmasse nach Anspruch 1, deren Gesamtgehalt an Polybutadien zwischen 5 bis 30 Gew.-%, bezogen auf die Polymermatrix, beträgt.

4. Formmasse nach Anspruch 1, dadurch gekennzeichnet, daß die Pfropfgrundlage der Kautschuk ein anionisch polymerisiertes Polybutadien ist.

5. Formmasse nach Anspruch 1, deren Pfropfcopolymerisat B2 als Pfropfgrundlage radikalisch polymerisiertes (Co)polybutadien mit bis zu 10 Gew.-%, bezogen auf Pfropfcopolymerisat B2, weiteren, radikalisch polymerisierbaren Monomeren ist.

6. Formmasse nach Anspruch 1, enthaltend mindestens ein weiteres, mit der Polymermatrix verträglichen Copolymerisat D.

7. Verfahren zur Herstellung einer Formmasse nach Anspruch 1, dadurch gekennzeichnet, daß ein durch Lösungspolymerisation erhaltenes ABS mit einem durch Emulsionspolymerisation erhaltenes ABS in an sich bekannter Weise in einer Knetmaschine miteinander verschmolzen und anschließend granuliert werden.

8. Verfahren zur Herstellung einer Formmasse nach Anspruch 1, dadurch gekennzeichnet, daß durch Emulsionspolymerisation erhaltenes ABS einer Polymerschmelze von ABS, die aus Lösungs- oder Massepolymerisation erhalten worden ist kontinuierlich zugemischt wird.

9. Verfahren zur Herstellung einer Formmasse, dadurch gekennzeichnet, daß der Formmasse nach Anspruch 1 mindestens ein weiteres mit der Hotmatrix verträgliches Polymeres auf einem Extruder oder Kneter zugemischt wird.

10. Verfahren zur Herstellung einer Formmasse nach Anspruch 1, dadurch gekennzeichnet, daß jeweils eines der Pfropfcopolymerisate B1 und B2 enthaltende Massen als Granulat miteinander vermischt und anschließend gemeinsam unter Schmelzen zur Formmasse verarbeitet werden.

## Claims

1. A rubber-modified, impact-resistant molding material containing, based on the sum of A, B1 and B2,
A: from 70 to 98% by weight of a polymer matrix A formed by free radical polymerization of a mixture of from 60 to 90% by weight of styrene and from 10 to 40% by weight of acrylonitrile,
B1: from 1 to 29% by weight of a particulate, first graft copolymer B1 distributed in the polymer matrix A and consisting of a grafting base of polybutadiene and grafts of a copolymer of styrene and acrylonitrile having a mean particle size of about 100-500 nm, and
B2: from 1 to 29% by weight of a particulate, second graft copolymer B2 distributed in the polymer matrix A and consisting of a grafting base of polybutadiene and grafts of a copolymer of styrene and acrylonitrile having a mean particle size of about 50-400 nm,
as obtained by a method in which the first graft copolymer B1 has been prepared by solution or mass polymerization and the second graft copolymer B2 has been prepared by emulsion polymerization, and both have been incorporated in the polymer matrix in a conventional manner.

2. A molding material as claimed in claim 1, wherein the two graft copolymers B1 and B2 are present in the polymer matrix in a weight ratio of from 10 : 90 to 90 : 10, based on polybutadiene.

3. A molding material as claimed in claim 1, whose total content of polybutadiene is from 5 to 30% by weight, based on the polymer matrix.

4. A molding material as claimed in claim 1, wherein the grafting base of the rubber is a polybutadiene polymerized by anionic polymerization.

5. A molding material as claimed in claim 1, whose graft copolymer B2 is (co)polybutadiene polymerized as the grafting base by free radical polymerization with not more than 10% by weight, based on graft copolymer B2, of further monomers polymerizable by free radical polymerization.

6. A molding material as claimed in claim 1, containing one or more further copolymers D compatible with the polymer matrix.

7. A process for the preparation of a molding material as claimed in claim 1, wherein an ABS obtained by solution polymerization is melted in a conventional manner, in a kneader, with an ABS obtained by emulsion polymerization, and the melt is then granulated.

8. A process for the preparation of a molding material as claimed in claim 1, wherein ABS obtained by emulsion polymerization is continuously mixed with a polymer melt of ABS which has been obtained by solution or mass polymerization.

9. A process for the preparation of a molding material, wherein one or more further polymers compatible with the rigid matrix are mixed with the molding material as claimed in claim 1 in an extruder or kneader.

10. A process for the preparation of a molding material as claimed in claim 1, wherein materials containing in each case one of the graft copolymers B1 and B2 are mixed with one another in the form of granules and then processed together with melting to give a molding material.

## Revendications

1. Masse de moulage modifiée par du caoutchouc et résistante aux chocs, contenant, par rapport à la somme de A, de B1 et de B2,
A : 70 à 98% en poids d'une matrice polymère A, formée par polymérisation, initiée par des radicaux, d'un mélange de 60 à 90 % en poids de styrène et de 10 à 40 % en poids d'acrylonitrile,
B1 : 1 à 29 % en poids d'un premier copolymère greffé B1 particulaire distribué dans la matrice polymère A, constitué d'une base de greffage de polybutadiène et de ramifications greffées d'un copolymère de styrène et d'acrylonitrile avec une granulométrie moyenne d'environ 100 à 500 nm et
B2 : 1 à 29% en poids d'un deuxième copolymère greffé B2 particulaire distribué dans la matrice polymère A, constitué d'une base de greffage de polybutadiène et de ramifications greffées d'un copolymère de styrène et d'acrylonitrile avec une granulométrie moyenne d'environ 50 à 400 nm,
telle qu'elle peut être obtenue en préparant le premier copolymère greffé B1 en solution et/ou en masse et le deuxième copolymère greffé B2 en émulsion et en incorporant les deux d'une manière courante dans la matrice polymère.

2. Masse de moulage selon la revendication 1, caractérisée en ce que les deux copolymères greffés B1 et B2 sont présents en un rapport massique de 10 : 90 à 90 : 10, par rapport au polybutadiène, dans la matrice polymère.

3. Masse de moulage selon la revendication 1, dont la teneur totale en polybutadiène se situe entre 5 et 30 % en poids, par rapport à la matrice polymère.

4. Masse de moulage selon la revendication 1, caractérisée en ce que la base de greffage du caoutchouc est un polybutadiène polymérisé de manière anionique.

5. Masse de moulage selon la revendication 1, dont le copolymère greffé B2, en tant que base de greffage, est un (co)polybutadiène polymérisé de manière radicalaire avec jusqu'à 10 % en poids, par rapport au copolymère greffé B2, de monomères supplémentaires polymérisables de manière radicalaire.

6. Masse de moulage selon la revendication 1, contenant au moins un copolymère supplémentaire D, compatible avec la matrice polymère.

7. Procédé pour la préparation d'une masse de moulage selon la revendication 1, caractérisé en ce qu'un ABS obtenu par polymérisation en solution est fusionné avec un ABS obtenu par polymérisation en émulsion d'une manière connue en soi dans un pétrin mécanique et ensuite granulé.

8. Procédé pour la préparation d'une masse de moulage selon la revendication 1, caractérisé en ce qu'un ABS obtenu par polymérisation en émulsion est ajouté de manière continue à une masse polymère d'ABS en fusion qui a été obtenue par polymérisation en solution ou en masse.

9. Procédé pour la préparation d'une masse de moulage, caractérisé en ce qu'on ajoute à la masse de moulage selon la revendication 1 au moins un polymère compatible avec la matrice chaude dans une extrudeuse ou dans un pétrin.

10. Procédé pour la préparation d'une masse de moulage selon la revendication 1, caractérisé en ce qu'on mélange, sous forme de granulés, les masses contenant respectivement un des copolymères greffés B1 et B2 et qu'on les transforme ensuite ensemble par fusion en masse de moulage.
